(19) Europäisches Patentamt

European Patent Office

Office européen des brevets

(11) Veröffentlichungsnummer: **0 206 290**
**B1**

(12) **EUROPÄISCHE PATENTSCHRIFT**

(45) Veröffentlichungstag der Patentschrift:
15.11.89

(21) Anmeldenummer: 86108469.7

(22) Anmeldetag: 20.06.86

(51) Int. Cl.⁴: **G01S 7/52**, G01S 7/62,
G01S 15/02

(54) Verfahren und Vorrichtung zur Erzeugung von Abbildungen.

(30) Priorität: 20.06.85  CH 2622/85

(43) Veröffentlichungstag der Anmeldung:
30.12.86 Patentblatt 86/52

(45) Bekanntmachung des Hinweises auf die Patenterteilung:
15.11.89 Patentblatt 89/46

(84) Benannte Vertragsstaaten:
CH DE FR GB IT LI NL SE

(56) Entgegenhaltungen:
EP-A- 0 107 172
EP-A- 0 146 182

IEEE TRANSACTIONS ON SONICS AND ULTRASONICS,
Band SU-32, Nr. 4, Juli 1985, Seiten 537-543, IEEE, New
York, US; P. MOHANA SHANKAR et al.: "Speckle
reduction with improved resolution in ultrasound
images"
HEWLETT-PACKARD JOURNAL, Band 34, Nr. 10,
Oktober 1983, Seiten 39,40, Palo Alto, US; P.A. MAGNIN:
"Coherent speckle in ultrasound images"
ULTRASONICS, Band 19, Nr. 5, September 1981,
Seiten 225-229, IPC Business Press, Guildford, Surrey,
GB; P.N.T. WELLS et al.:"Speckle in ultrasonic
imaging"
IEEE 1980 ULTRASONICS SYMPOSIUM PROCEEDINGS,

(73) Patentinhaber: **KONTRON-HOLDING AG, Bernerstrasse
Süd 169, CH-8048 Zürich(CH)**

(72) Erfinder: **Burckhardt, Christoph Benedikt, Dr.,
Rebgasse 14, CH-4132 Muttenz(CH)**
Erfinder: **Dousse, Bruno Marie Joseph,
Eisenbahnweg 18, CH-4058 Basel(CH)**

(74) Vertreter: **Körber, Wolfhart, Dr. et al, Patentanwälte
Dipl.-Ing. H. Mitscherlich Dipl.-Ing. K. Gunschmann
Dr.rer.nat. W. Körber Dipl.Ing. J. Schmidt-Evers Dipl.-Ing.
W. Melzer Steinsdorfstrasse 10, D-8000 München 22(DE)**

(56) Entgegenhaltungen: (Fortsetzung)
**Boston, US, 5.-7. November 1980, Band 1/2,
Seiten 1073-1076, IEEE, New York, US; H.E. MELTON,
Jr.: "Parallel-focusing and speckle reduction in medical
ultrasonic imaging"
IEEE 1979 ULTRASONICS SYMPOSIUM PROCEEDINGS,
New Orleans, LA, US, 26.-28. September 1979,
Seiten 169-174, IEEE, New York, US; R. ENTREKIN et al.:
"Real time speckle reduction in B-mode images"**

**Beschreibung**

Die Erfindung betrifft ein Verfahren zur Erzeugung einer Abbildung eines zu untersuchenden Raumes, bei welchem Verfahren Wellenimpulse, die mit einer gepulsten Quelle kohärenter Wellen erzeugt werden, in den Raum gesendet werden, die von im Raum liegenden Reflektoren feflektierten Echowellen empfangen werden, jeweils ein entsprechendes elektrisches Echosignal erzeugt wird, und durch eine Amplitudendemodulation von einem vom Echosignal abgeleiteten Signal, dessen Amplitude proportional zur Amplitude der Echosignale ist, ein erstes Ausgangsignal erzeugt wird.

Die Erfindung betrifft ferner ein Verfahren zur Erzeugung einer Abbildung eines zu untersuchenden Raumes, bei welchem Verfahren Wellenimpulse, die mit einer gepulsten Quelle kohärenter Wellen erzeugt werden, in den Raum gesendet werden, die von im Raum liegenden Reflektoren reflektierten Echowellen empfangen werden, und jeweils ein entsprechendes elektrisches Echosignal erzeugt wird, und durch eine Amplitudendemodulation von einem Signal, das vom Echosignal durch Logarithmierung abgeleitet wird, ein erstes Ausgangssignal erzeugt wird, das die Amplitudeninformation des Echosignals darstellt.

Die Erfindung betrifft ferner Vorrichtungen zur Durchführung der obigen Verfahren.

Unter den Verfahren der oben erwähnten Art findet z.B. die Ultraschallabbildung von Organen eine wachsende Anwendung in der medizinischen Diagnose. Die Vorteile der Ultraschallabbildung gegenüber Röntgenverfahren bestehen darin, daß nicht ionisierende Strahlung verwendet wird, daß Weichteile ohne Kontrastmittel abgebildet werden, daß eine Echtzeitabbildung möglich ist, und daß Ultraschallgeräte zu einem verhältnismäßig günstigen Preis erhältlich sind.

Die medizinische Ultraschalldiagnostik hat heute einen Stand erreicht, der eine breite klinische Anwendung ermöglicht. Die Bildqualität wird aber unter anderem durch den sogenannten "speckle noise" beeinträchtigt, der das körnige Aussehen der Ultraschallbilder prägt und der ein Hindernis zur Gewebedifferenzierung darstellt. In ungünstigem Winkel getroffene Grenzflächen oder kleine Strukturen sind wegen der Körnigkeit der Abbildung nicht erkennbar. Unter "Speckle" versteht man die körnige Struktur eines Ultraschallbildes. Es handelt sich dabei um ein Artefakt, hervorgerufen durch die Kohärenz des Ultraschall. "Speckle" stellt heute das Haupthindernis bei der Erkennung von Details in Ultraschallbildern dar. Infolge von Speckle hat das Signal-Rausch-Verhältnis eines Ultraschallbildes nur den Wert von 1.91 (C.B. Burckhardt, "Speckle in Ultrasound B-Mode Scans", IEEE Trans. on Sonics and Ultrasonics, vol. SU-25, 1978, Seiten 1–6). "Speckle" beeinträchtigt also die Erkennbarkeit von kleinen und/oder kontrastarmen Strukturen, z.B. Metastasen, wesentlich. Es wurden daher schon verschiedene Verfahren zur Verringerung des "Speckle" vorgeschlagen. Alle diese Verfahren haben jedoch gewisse Nachteile. Die bis jetzt verwendeten Verfahren und ihre Nachteile sind wie folgt:

1. Tiefpaßfilterung der Bildsignale:

Dabei wird die Amplitude der Bildsignale über mehrere "Specklekörner" gemittelt, und dadurch werden die Schwankungen solcher Amplituden verkleinert. Dieses Verfahren wird kaum angewendet, weil die Auflösung dadurch verkleinert wird.

2. Mitteilung der Bildsignale über mehrere Bilder, die mit verschiedenen Frequenzen aufgenommen wurden:

Dieses ist das sogenannte "Frequency Compounding"-Verfahren (P. A. Magnin, O.T. von Ramm, F.L. Thurstone, "Frequency Compounding for Speckle Contrast Reduction in Phased Array Images", Ultrasonic Imaging, vol. 4, 1982, Seiten 267–281). Da die Bilder mit verschiedenen Frequenzen aufgenommen werden, ist der Speckle in den verschiedenen Bildern bei diesem Verfahren mehr oder weniger unkorreliert (je nach Überlappung der Frequenzbänder) und das gemittelte Bild zeigt weniger Speckle. Dieses Verfahren hat jedoch folgende Nachteile:

– Ein breitbandiges System ist notwendig, um Bilder bei mehreren Frequenzen aufzunehmen. Da die Ultraschallabsorption im Gewebe mit zunehmender Frequenz steigt, ist der Anzahl verwendbarer Frequenzen prinzipiell eine Grenze gesetzt.

– Das breitbandige System könnte so verwendet werden, daß eine bessere Längsauflösung erreicht wird. Die Aufteilung in mehrere Frequenzbänder führt zu einer Längsauflösung, die niedriger als die maximal mögliche ist.

3. Mitteilung der Bildsignale über mehrere Bilder, die aus verschiedenen Richtungen aufgenommen wurden:

Dies ist das Prinzip des "Compound Scan"-Verfahrens (C.B. Burckhardt, "Speckle in Ultrasound B-Mode Scans", IEEE Trans. on Sonics and Ultrasonics, vol. SU-25, 1978, Seiten 1–6; D.P. Shattuck und O.T. von Ramm, Ultrasonic Imaging 4, 1982, Seiten 93–107). Dieses Verfahren ermöglicht eine wesentliche Reduktion des Speckle und dadurch eine entsprechende Verbesserung der Bildqualität. Dieses Verfahren hat aber folgende Nachteile:

– Die Komplexität eines Gerätes zur Anwendung dieses Verfahrens ist wesentlich höher als die Komplexität eines normalen Ultraschallgerätes.

– Es wird mehr Zeit benötigt, um Bilder in verschiedenen Richtungen aufzunehmen. Dadurch sinkt die maximal mögliche Bildrate.

– Es ist nötig, daß die darzustellende Struktur über einen größeren Winkelbereich "sichtbar" ist für Ultraschall; d.h. es wird ein größeres "Ultraschallfenster" benötigt als bei konventionellen Verfahren.

Die Ultraschallbildung ist nicht das einzige Abbildungsverfahren, welches mit dem Problem "Speckle" konfrontiert ist. Ähnliche Abbildungsverfahren, die mit kohärenter Strahlung arbeiten, wie z.B. Radar, kennen das Problem ebenfalls. Zu erwähnen ist insbesondere das "Synthetic Aperture Radas" (W.M. Brown, J.L. Porcello, "An Introduction to Synthetic Aperture Radar", IEEE Spectrum vol. 6, 1969, Seiten 52–62).

Ein Verfahren zur Erzeugung einer Abbildung eines zu untersuchenden Raumes, bei welchem Verfahren Wellenimpulse, die mit einer gepulsten Quelle kohärenter Wellen erzeugt werden, in den Raum gesendet werden, die von im Raum liegenden Reflektoren reflektierten Echowellen empfangen werden, jeweils ein entsprechendes elektrisches Echosignal erzeugt wird, und durch eine Amplitudendemodulation von einem Signal, das vom Echosignal abgeleitet wird, ein Ausgangssignal erzeugt wird, ist in der EP-A 0 107 172 beschrieben. Diese Schrift enthält jedoch keinen Hinweis auf die nachstehende Aufgabestellung oder auf die erfindungsgemäßen Verfahren bzw. Vorrichtungen.

Der Erfindung liegt die Aufgabe zugrunde, ein Verfahren bzw. eine Vorrichtung der oben erwähnten Art zu schaffen, mit denen die Körnigkeit der Abbildungen reduziert werden kann, ohne die oben erwähnten Nachteile der bisher bekannten Methoden in Kauf nehmen zu müssen.

Erfindungsgemäß wird diese Aufgabe mit einem Verfahren der eingangs an erster Stelle genannten Art gelöst, das dadurch gekennzeichnet ist, daß

a) durch eine Frequenz- oder Phasendemodulation vom Signal, das vom Echosignal abgeleitet wird, ein zweites Ausgangssignal erzeugt wird, das die Frequenz- oder Phaseninformation des Echosignals darstellt, und

b) das erste und das zweite Ausgangssignal multipliziert werden, um ein Bildsignal zu erzeugen, das zur Erzeugung der Abbildung des Raumes mittels einer Anzeigevorrichtung sichtbar gemacht werden kann.

Erfindungsgemäß wird die obige Aufgabe ferner mit einem Verfahren der eingangs an zweiter Stelle genannten Art gelöst, das dadurch gekennzeichnet ist, dass

a) durch eine Frequenz- oder Phasendemodulation von dem Signal, das vom Echosignal abgeleitet wird, ein zweites Ausgangssignal erzeugt wird, das die Frequenz- oder Phaseninformation des Echosignals darstellt, und

b) das erste und das zweite Ausgangssignal addiert werden, um ein Bildsignal zu erzeugen, das zur Erzeugung der Abbildung des Raumes mittels einer Anzeigevorrichtung sichtbar gemacht werden kann.

Gegenstand der Erfindung ist auch eine Vorrichtung zur Erzeugung einer Abbildung eines zu untersuchenden Raumes, welche Vorrichtung folgende Elemente enthält:

eine gepulste Quelle kohärenter Wellen,
eine mit der Quelle verbundene Wandlereinrichtung, mit der Wellenimpulse in den Raum gesendet werden, die von im Raum liegenden Reflektoren reflektierten Echowellen empfangen werden, und jeweils ein entsprechendes elektrisches Echosignal erzeugt wird,

einen mit der Wandlereinrichtung verbundenen Empfänger zur Erzeugung eines Bildsignals durch Verarbeitung des Echosignals, welcher Empfänger einen ersten Signalpfad enthält, der einen mit der Wandlereinrichtung verbundenen Eingang hat, einen Amplitudendemodulator enthält, und einen Ausgang hat, an dem ein erstes Ausgangssignal abgegeben wird, das die Amplitudeninformation des Echosignals darstellt, dessen Amplitude proportional zur Amplitude der Echosignale ist, und

eine mit dem Empfänger verbundene Bildanzeigevorrichtung.

Erfindungsgemäß ist diese Vorrichtung dadurch gekennzeichnet, daß der Empfänger ferner folgende Einrichtungen aufweist:

a) einen zweiten Signalpfad, der einen mit dem Eingang des ersten Signalpfades und dadurch mit der Wandlereinrichtung verbundenen Eingang, einen Frequenz- oder Phasendemodulator und einen Ausgang hat, an dem ein zweites Ausgangssignal abgegeben wird, das die Frequenz- oder Phaseninformation des Echosignals darstellt, und

b) eine Multiplizierschaltung, die einen ersten mit dem Ausgang des ersten Signalpfades verbundenen Eingang, einen zweiten mit dem Ausgang des zweiten Signalpfades verbundenen Eingang und einen Ausgang hat, an dem ein Bildsignal entnommen werden kann, das durch Multiplizieren der Ausgangssignale des ersten und des zweiten Signalpfades erzeugt wird.

Gegenstand der Erfindung ist außerdem eine Vorrichtung zur Erzeugung einer Abildung eines zu untersuchenden Raumes, welche Vorrichtung folgende Elemente enthält:

eine gepulste Quelle kohärenter Wellen und eine mit der Quelle verbundene Wandlereinrichtung, mit der Wellenimpulse in den Raum gesendet werden, die von im Raum liegenden Reflektoren reflektierten Echowellen empfangen werden, und jeweils ein entsprechendes elektrisches Echosignal erzeugt wird,

einen mit der Wandlereinrichtung verbundenen Empfänger zur Erzeugung eines Bildsignals durch Verarbeitung des Echosignals, welcher Empfänger einen ersten Signalpfad enthält, der einen mit der Wandlereinrichtung verbundenen Eingang, einen Amplitudendemodulator und einen Ausgang hat, an dem ein erstes Ausgangssignal abgegeben wird, dessen Amplitude annähernd dem Logarithmus der Amplitude des Echosignals entspricht, und

eine mit dem Empfänger verbundene Bildanzeigevorrichtung.

Erfindungsgemäß ist diese Vorrichtung dadurch gekennzeichnet, daß der Empfänger ferner folgende Einrichtungen aufweist:

a) einen zweiten Signalpfad, der einen mit dem Eingang des ersten Signalpfades und dadurch mit der Wandlereinrichtung verbundenen Eingang, einen Frequenz- oder Phasendemodulator und einen Ausgang hat, an dem ein zweites Ausgangssignal abgegeben wird, das die Frequenz- oder Phaseninformation des Echosignals darstellt, und

b) eine Addiererschaltung, die einen ersten mit dem Ausgang des ersten Signalpfades verbundenen Eingang, einen zweiten mit dem Ausgang des zweiten Signalpfades verbundenen Eingang und einen Ausgang hat, an dem ein Bildsignal entnommen werden kann, das durch Addieren der Ausgangssignale des ersten und des zweiten Signalpfades erzeugt wird.

Die durch die Erfindung erzielten Vorteile sind im wesentlichen darin zu sehen, daß die Körnigkeit der Abbildungen mit relativ einfachen Mitteln reduziert wird, und daß dabei die Nachteile der bisher bekannten Verfahren vermieden werden.

Im folgenden werden anhand der beiliegenden Zeichnungen einige Ausführungsbeispiele der Erfindung beschrieben.

Es stellen dar

Fig. 1 ein Blockschema eines Ultraschallgerätes.

Fig. 2 eine typische Kennlinie des logarithmischen Verstärkers 18 in Fig. 1.

Fig. 3 ein Blockschema eines Radargerätes.

Fig. 4 ein Blockschema einer ersten erfindungsgemäßen Ausführungsform des Detektors 19 in Figuren 1 und 3.

Fig. 5 ein Blockschema einer zweiten erfindungsgemäßen Ausführungsform des Detektors 19 für Varianten der Geräte gemäß Figuren 1 und 3.

Fig. 6 ein Blockschema mit bevorzugten Ergänzungen des Detektors 19 gemäß Figuren 4 und 5.

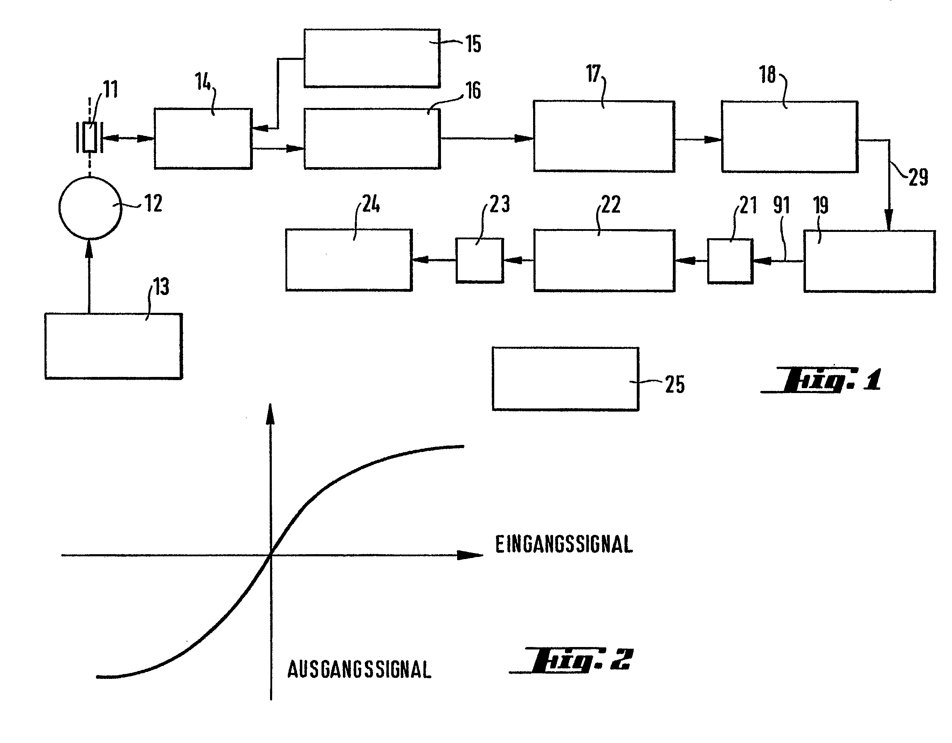

Fig. 1 zeigt ein Blockschema eines Ultraschallgerätes, nämlich eines mechanischen Sektorscanners. Ein gepulster Sender 15 steuert über einen Duplexer 14 einen Ultraschallwandler 11 an. Das empfangene Signal gelangt über den Duplexer zu einem Vorverstärker 16. Ein diesem nachgeschalteter Swept-gain-Verstärker 17 hat eine Verstärkung, die mit der Zeit variiert, und dient zur Kompensation des Amplitudenabfalls, der durch die Gewebedämpfung verursacht wird. Dem Verstärker 17 ist ein logarithmischer Verstärker 18 nachgeschaltet, der ein Ausgangssignal liefert, das über einen bestimmten Bereich proportional zum Logarithmus des Eingangssignals ist.

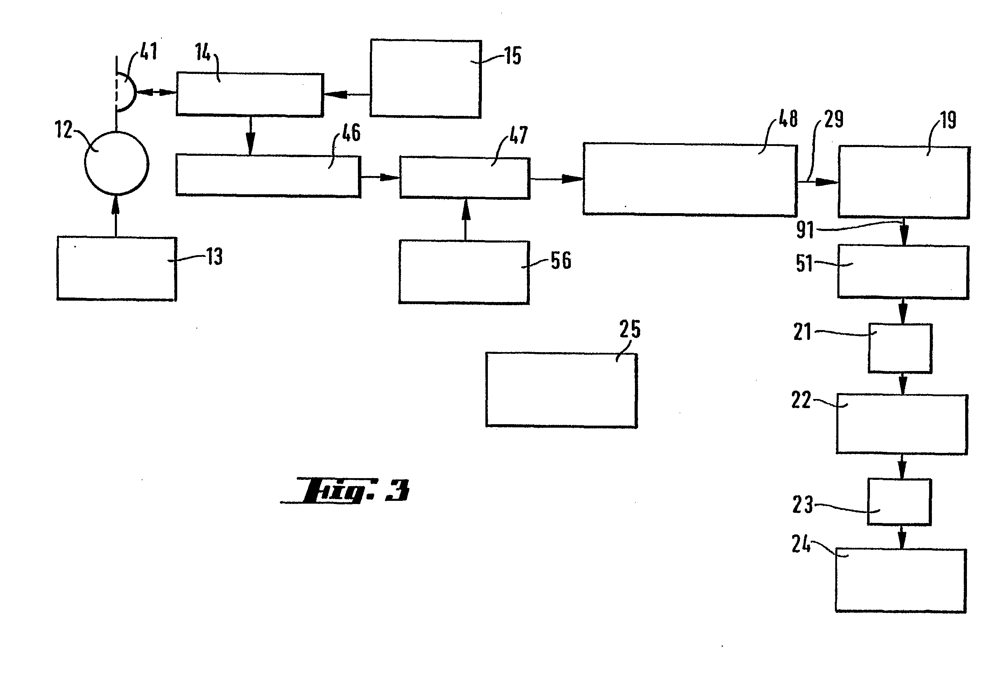

Die Kennlinie des logarithmischen Verstärkers 18 ist in Fig. 2 skizziert. Es ist daraus ersichtlich, dass bei Eingangsamplitude Null die Ausgangsamplitude ebenfalls Null ist, im Unterschied zum wirklichen Logarithmus der Eingangsamplitude, der dann den Wert von -∞ annimmt. Wie in Fig. 2 gezeigt, ist die Kennlinie für negative Eingangsamplituden punktsymmetrisch zur Kennlinie für positiven Eingangsamplituden.

Der Ausgang des logarithmischen Verstärker 18 ist über eine Leitung 29 mit dem Eingang eines Detektors 19 verbunden. Bei herkömmlichen Ultraschallgeräten werden mit diesem Detektor eine Absolutwertbildung und eine Tiefpassfilterung des Ausgangssignals des logarithmischen Verstärkers 18 durchgeführt. Das Ausgangssignal des Detektors 19 wird über eine Leitung 91 abgegeben. Dieses Signal wird mit einem Analog/Digital-Umsetzer 21 analog zu digital gewandelt. Das Ausgangssignal des Umsetzers 21 wird in einem Bildspeicher/Normwandler 22 zwischengespeichert. Gleichzeitig wird der Bildspeicher/Normwandler 22 ausgelesen. Das ausgelesene Signal wird mit einem Digital/AnalogUmsetzer 23 digital zu analog gewandelt. Das Ausgangssignal des Umsetzers 23 wird als Fernsehnormsignal einem Fernsehmonitor 24 zugeführt.

Der Ultraschallwandler 11 wird von einem Motor 12 bewegt, der durch eine Motorsteuerung 13 angesteuert wird. Die dargestellte Steuerelektronik 25 gibt Befehls- und Synchronisiersignale an alle dargestellten Blöcke, über Verbindungen, die nicht dargestellt sind.

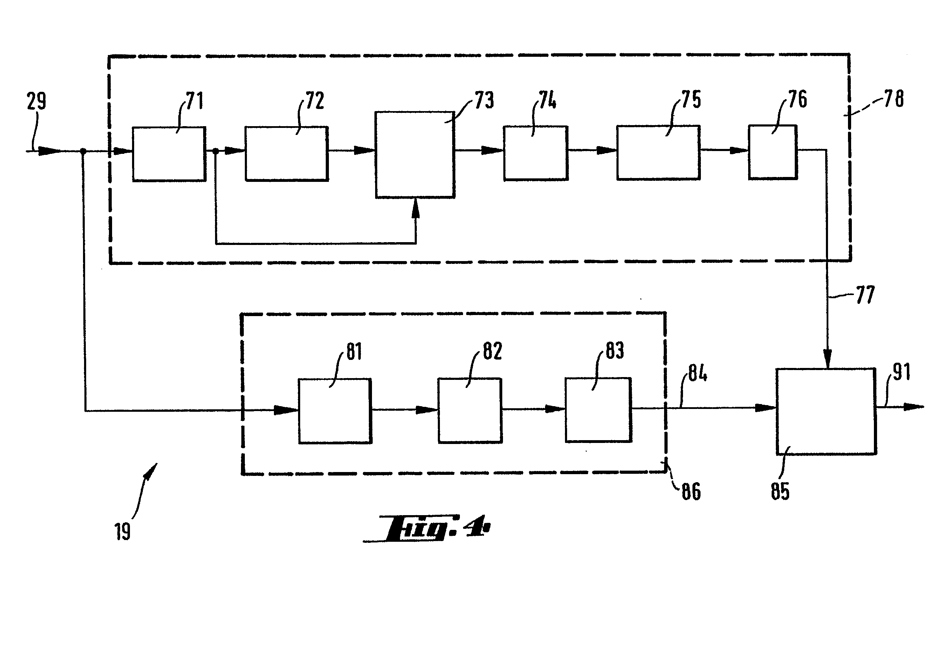

Fig. 3 zeigt das Blockschema eines Radargerätes. Da dieses sehr ähnlich wie dasjenige des in Fig. 1 dargestellten Ultraschallgerätes ist, werden hier nur die Unterschiede zwischen diesen Geräten beschrieben. Das Ultraschallgerät gemäss Fig. 1 funktioniert bei einer Frequenz im Megahertzbereich, währenddem das Radargerät gemäss Fig. 3 im Mikrowellenbereich arbeitet. Anstelle von einem Ultraschallwandler hat das Radargerät eine Antenne 41, mit der elektromagnetischen Wellenimpulse abgestrahlt und Echowellen empfangen werden. Das mit einem HF-Verstärker 46 verstärkte Echosignal wird in einem Mischer 47 in ein Signal im Zwischenfrequenzbereich konvertiert. Hierfür erhält der Mischer ein Trägerfrequenzsignal von einem Lokaloszillator 56. Dem Mischer 47 ist ein logarithmischer ZF-Verstärker 48 nachgeschaltet. Die Kennlinie dieses Verstärkers ist ähnlich wie diejenige des Verstärkers 18 in Fig. 1. Die Zwischenfrequenz liegt typisch im Megahertzbereich, so dass am Ausgang des logarithmischen Verstärkers 48 ein ähnliches Signal abgegeben wird, wie am Ausgang des Verstärkers 18 in Fig. 1.

Im Radargerät gemäss Fig. 3 ist ein Videoverstärker 51 zwischen dem Detektor 19 und dem Analog/Digital-Umsetzer 21 eingeschaltet. Ein Swept-gain-Verstärker (im Radargebiet als "sensitivity time control" bekannt) kann zwischen dem HF-Verstärker 46 und dem Mischer 47 eingeschaltet sein. Ein solcher Verstärker ist in Fig. 3 nicht gezeigt.

Die vorliegende Erfindung betrifft insbesondere die Ausbildung des Detektors 19 in den Geräten gemäss Figuren 1 und 3.

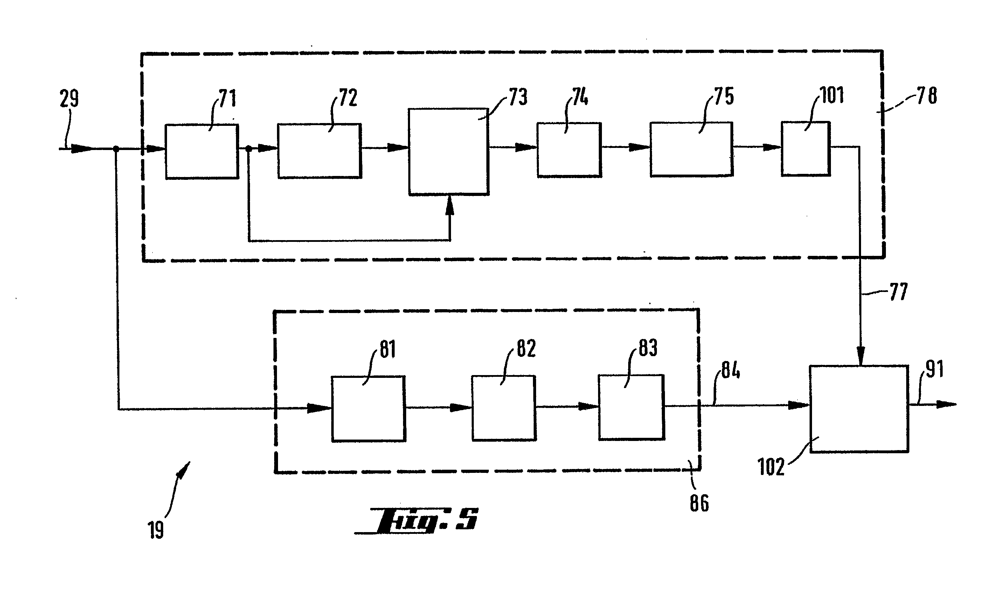

Fig. 4 zeigt das Blockschema einer ersten Ausführungsform eines erfindungsgemässen Detektors 19. Dieser enthält einen ersten Signalpfad 86 und einen zweiten Signalpfad 78. Die Ausgangssignale der Ausgänge 77 und 84 dieser beiden Signalpfade werden mit einer Addierschaltung 85 addiert. Das Ausgangssignal dieser Schaltung ist zugleich das Ausgangssignal des Detektors 19, das über die Leitung 91 abgegeben wird.

Der erste Signalpfad 86 ist ein im wesentlichen konventioneller Amplitudendemodulator. Er enthält die Reihenschaltung eines Gleichrichters 81, eines Tiefpassfilters 82 und eines Verzögerungsgliedes 83, das dazu dient, die Verzögerungen der Signale gleich zu machen, die den ersten und den zweiten Signalpfad durchlaufen.

Der zweite Signalpfad 78 ist ein Frequenz- oder Phasendemodulator, der die Reihenschaltung folgender Funktionsblöcke enthält:
einen Amplitudenbegrenzer 71, eine Verzögerungsleitung 72, die eine Verzögerung von $T_0/4$ bewirkt, wobei $T_0$ die Periode der Sendefrequenz ist, eine als Multiplikator 73 verwendete integrierte Schaltung (z.B. die integrierte Schaltung LM 1496 von National Semiconductor), mit der das Ausgangssignal des Begrenzers 71 und das Ausgangssignal der Verzögerungsleitung 72 multipliziert werden, einen Tiefpassfilter 74, mit dem die höheren Harmonischen eliminiert werden, die bei der Multiplikation entstehen, eine Schaltung 75 zur Erzeugung eines Ausgangssignals, das den Absolutwert der Amplitude des Ausgangssignals des Tiefpassfilters 74 darstellt, und einen Multiplikator 76, mit dem das Ausgangssignal der Schaltung 75 mit einem Faktor K multipliziert wird. Für ein beliebiges Echosignal ist die Amplitude de Ausgangssignals des Multiplikators 76 proportional zum Absolutwert der Abweichung der Frequenz des Echosignals von einer Referenzfrequenz.

Die frequenzabhängige Dämpfung des Gewebes bewirkt, dass die Mittelfrequenz des Echos mit zunehmender Tiefe der Reflektoren sinkt. Daher sollte die Sendefrequenz $f_0$ vorzugsweise nur bei kleinem Zeitabstand zwischen Sendeimpuls und Echo als Referenzfrequenz genommen werden. Mit zunehmendem Zeitabstand zwischen Sendeimpuls und Echo sollte die Referenzfrequenz vorzugsweise entsprechend erniedrigt werden. Dies kann gemacht werden, indem die Verzögerung der Verzögerungsleitung 72 in Fig. 4 mit zunehmender Zeit vergrössert wird. Dazu können zum Beispiel spannungsgesteuerte Kondensatoren (Varicap) in einer geeigneten Schaltung verwendet werden.

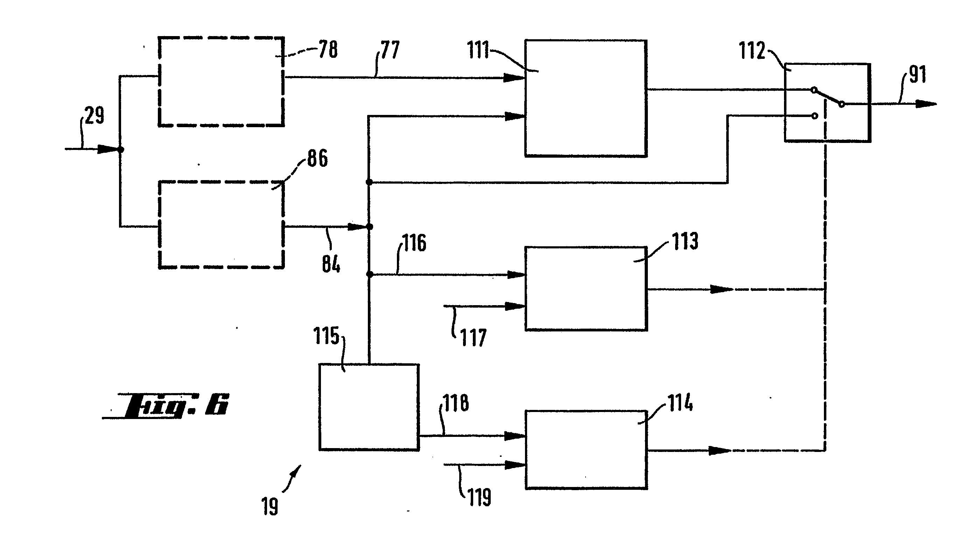

Fig. 5 zeigt das Blockschema einer zweiten Ausführungsform eines erfindungsgemässen Detektors 19 in Figuren 1 und 3. Diese zweite Ausführungsform ist für eine Variante des Ultraschallgerätes gemäss Fig. 1 bzw. des Radargerätes gemäss Fig. 3 vorgesehen. Diese Variante unterscheidet sich von den Geräten gemäss Figuren 1 und 3 lediglich dadurch, dass anstelle des logarithmischen Verstärkers 18 bzw. 48 ein linearer Verstärker verwendet wird, d.h. ein Verstärker, bei dem die Amplitude des Ausgangssignals proportional zur Amplitude des Eingangssignals ist. Die Unterschiede zwischen dem Detektor gemäss Fig. 5 und dem Detektor gemäss Fig. 4 sind wie folgt:
- Anstelle des Multiplikators 76 in Fig. 4 wird eine Schaltung 101 verwendet, die ein Ausgangssignal erzeugt, dessen Amplitude eine nicht lineare Funktion des Absolutwertes $|\Delta f|$ der Abweichung der Frequenz des Echosignals von einer Referenzfrequenz ist. Eine solche Funktion ist z.B. eine Potenzierung mit dem Exponenten $K.|\Delta f|$.
- Anstelle der Addierschaltung 85 in Fig. 4 wird eine als Multiplikator verwendete integrierte Schaltung 102 verwendet (z.B. die integrierte Schaltung MC 1495 L von Motorola). In diesem Fall wird also das über die Leitung 91 abgegebene Ausgangssignal des Detektors 19 durch Multiplikation des Ausgangssignal des ersten Signalpfads 86 und des Ausgangssignals des zweiten Signalpfads 78 erzeugt.

Im Rahmen der vorliegenden Erfindung kann die Schaltung 75 in Figuren 4 und 5 durch eine Schaltung ersetzt werden, deren Kennlinie eine gerade Funktion, d.h. eine Funktion der Form $g(-x) = g(x)$ darstellt, z.B. $g(x) = x^2$.

Fig. 6 zeigt bevorzugte Ergänzungen der Ausführungsformen des Detektors 19 gemäss Figuren 4 und 5. In Fig. 6 stellt die Verknüpfungsschaltung 111 die Addierschaltung 85 in Fig. 4 oder den Multiplikator 102 in Fig. 5 dar.

Nach einer ersten in Fig. 6 gezeigten Ergänzung enthält der Detektor 19 einen Schalter 112, der im Ansprechen auf das Ausgangssignal eines Grenzwertgliedes 113 entweder den Ausgang der Verknüpfungsschaltung 111 oder den Ausgang 84 des ersten Signalpfades 86 mit der Ausgangsleitung 91 des Detektors 19 verbindet, über die dieser mit dem Fernsehmonitor 24 verbunden ist. Ein Eingang 116 des Grenzwertgliedes 113 ist mit dem Ausgang des ersten Signalpfades 86 verbunden. Einem zweiten Eingang 117 des Grenzwertgliedes 113 wird ein Referenzsignal zugeführt, das einem ersten vorgegebenen Grenzwert entspricht. Wenn die Amplitude des Ausgangssignals des ersten Signalpfads 86 den ersten vorgegebenen Grenzwert überschreitet, bewirkt das entsprechende Ausgangssignal des Grenzwertgliedes 113, dass der Schalter 112 den Ausgang 84 des ersten Signalpfades 86 mit der Leitung 91 verbindet. Durch die soeben beschriebene Ergänzung wird für Echosignale, deren Amplitude einen vorgegebenen Wert überschreitet, allein der erste Signalpfad 86 des Detektors 19 für die Detektor-Funktion verwendet. Dies ist vorteilhaft, weil grosse Echosignale im allgemeinen von spiegelnd reflektierenden Objekten stammen, und solche Echos in der Regel keinen "Speckle" in der Abbildung verursachen, so dass die Funktion des erfindungsgemässen Detektors 19 gemäss Figuren 4 oder 5 für solche Echos überflüssig ist und zu einer Verschlechterung der Längsauflösung führen kann.

Nach einer zweiten in Fig. 6 gezeigten Ergänzung enthält der Detektor 19 zusätzlich ein zweites Grenzwertglied 114 und eine Einrichtung 115 zur Messung des Signal-Rausch-Verhältnisses des Ausgangspfades 86. Der Ausgang dieser Einrichtung ist mit einem Eingang 118 des Grenzwertgliedes 114 verbunden. Einem zweiten Eingang 119 des Grenzwertgliedes 114 wird ein Referenzsignal zugeführt, das einem zweiten vorgegebenen Grenzwert entspricht. Im Ansprechen auf das Ausgangssignal des Grenzwertgliedes 114 verbindet der Schalter 112 entweder den Ausgang der Verknüpfungsschaltung 111 oder den Ausgang 84 des ersten Signalpfades mit der Leitung 91. Wenn die Amplitude des Ausgangssignals der Einrichtung 115 den zweiten vorgegebenen Grenzwert unterschreitet, bewirkt das entsprechende Ausgangssignal des Grenzwertgliedes 114, dass der Schalter 112 den Ausgang des ersten Signalpfades 86 mit der Leitung 91 verbindet. Durch die soeben beschriebene zweite Ergänzung wird für Echosignale, deren Signal-Rausch-Verhältnis einen vorgegebenen Grenzwert unterschreitet, allein der erste Signalpfad 86 verwendet. Des ist vorteilhaft, weil die Verwendung des Detektors 19 gemäss Figuren 4 oder 5 für solche Echosignale zu einer Verschlechterung der Bildqualität führen kann.

**Patentansprüche**

1. Verfahren zur Erzeugung einer Abbildung eines zu untersuchenden Raumes, bei welchem Verfahren Wellenimpulse, die mit einer gepulsten Quelle kohärenter Wellen erzeugt werden, in den Raum gesendet werden, die von im Raum liegenden Reflektoren reflektierten Echowellen empfangen werden, jeweils ein entsprechendes elektrisches Echosignal erzeugt wird, und durch eine Amplitudendemodulation von einem vom Echosignal abgeleiteten Signal, dessen Amplitude proportional zur Amplitude der Echosignale ist, ein erstes Ausgangssignal erzeugt wird, dadurch gekennzeichnet, daß
a) durch eine Frequenz- oder Phasendemodulation von dem Signal, das vom Echosignal abgeleitet wird, ein zweites Ausgangssignal erzeugt wird, das die Frequenz- oder Phaseninformation des Echosignals darstellt, und
b) das erste und das zweite Ausgangssignal multipliziert werden, um ein Bildsignal zu erzeugen, das zur Erzeugung der Abbildung des Raumes mittels einer Anzeigevorrichtung sichtbar gemacht werden kann.

2. Verfahren zur Erzeugung einer Abbildung eines zu untersuchenden Raumes, bei welchem Verfahren Wellenimpulse, die mit einer gepulsten Quelle kohärenter Wellen erzeugt werden, in den Raum gesendet werden, die von im Raum liegenden Reflektoren reflektierten Echowellen empfangen werden, und jeweils ein entsprechendes elektrisches Echosignal erzeugt wird, und durch eine Amplitudendemodulation von einem Signal, das vom Echosignal durch Logarithmierung abgeleitet wird, ein erstes Ausgangssignal erzeugt wird, das die Amplitudeninformation des Echosignals darstellt, dadurch gekennzeichnet, daß
a) durch eine Frequenz- oder Phasendemodulation von dem Signal, das vom Echosignal abgeleitet wird, ein zweites Ausgangssignal erzeugt wird, das die Frequenz- oder Phaseninformation des Echosignals darstellt, und
b) das erste und das zweite Ausgangssignal addiert werden, um ein Bildsignal zu erzeugen, das zur Erzeugung der Abbildung des Raumes mittels einer Anzeigevorrichtung sichtbar gemacht werden kann.

3. Verfahren nach Anspruch 1, dadurch gekennzeichnet, daß die Amplitude des zweiten Ausgangssignals eine nichtlineare Funktion des Absolutwertes der Abweichung der Frequenz des Echosignals von einer Referenzfrequenz ist.

4. Verfahren nach Anspruch 2, dadurch gekennzeichnet, daß die Amplitude des zweiten Ausgangssignals proportional zum Absolutwert der Abweichung der Frequenz des Echosignals von einer Referenzfrequenz ist.

5. Verfahren nach einem der Ansprüche 3 oder 4, dadurch gekennzeichnet, daß die Referenzfrequenz gleich der Sendefrequenz ist.

6. Verfahren nach einem der Ansprüche 3 oder 4, dadurch gekennzeichnet, daß die Referenzfrequenz variable und um eine Tiefenkorrektur kleiner als die Sendefrequenz ist.

7. Verfahren nach einem der Ansprüche 1–6, dadurch gekennzeichnet, daß ein Signal, das der Amplitude des ersten Ausgangssignals entspricht, mit einem vorgegebenen Grenzwert verglichen wird, und daß, wenn die Amplitude des ersten Ausgangssignals größer als der Grenzwert ist, die Kombination der Ausgangssignale unterlassen wird, und das erste Ausgangssignal als Bildsignal verwendet wird.

8. Verfahren nach einem der Ansprüche 1–7, dadurch gekennzeichnet, daß das Signal-Rausch-Verhältnis des ersten Ausgangssignal gemessen und mit einem vorgegebenen Grenzwert verglichen wird, und daß, wenn das gemessene Verhältnis kleiner als der Grenzwert ist, die Kombination der Ausgangssignale unterlassen wird, und das erste Ausgangssignal als Bildsignal verwendet wird.

9. Vorrichtung zur Erzeugung einer Abbildung eines zu untersuchenden Raumes, welche Vorrichtung folgende Elemente enthält:
eine gepulste Quelle (15) kohärenter Wellen und eine mit der Quelle verbundene Wandlereinrichtung (11, 41), mit der Wellenimpulse in den Raum gesendet werden, die von im Raum liegenden Reflektoren reflektierten Echowellen empfangen werden, und jeweils ein entsprechendes elektrisches Echosignal erzeugt wird,
einen mit der Wandlereinrichtung (11, 41) verbundenen Empfänger zur Erzeugung eines Bildsignals durch Verarbeitung des Echosignals, welcher Empfänger einen ersten Signalpfad (86) enthält, der einen mit der Wandlereinrichtung (11, 41) verbundenen Eingang hat, einen Amplitudendemodulator (81, 82) enthält, und einen Ausgang (84) hat, an dem ein erstes Ausgangssignal abgegeben wird, dessen Amplitude proportional zur Amplitude der Echosignale ist, und
eine mit dem Empfänger verbundene Bildanzeigevorrichtung (24),
dadurch gekennzeichnet, daß der Empfänger ferner folgende Einrichtungen aufweist:
a) einen zweiten Signalpfad (78), der einen mit dem Eingang des ersten Signalpfades und dadurch mit der Wandlereinrichtung (11, 41) verbundenen Eingang, einen Frequenz- oder Phasendemodulator (72, 73, 74) und einen Ausgang (77) hat, an dem ein zweites Ausgangssignal abgegeben wird, das die Frequenz- oder Phaseninformation des Echosignals darstellt, und
b) eine Multiplizierschaltung (85, 102, 111), die einen ersten mit dem Ausgang (84) des ersten Signalpfades verbundenen Eingang, einen zweiten mit dem Ausgang (77) des zweiten Signalpfades verbundenen Eingang und einen Ausgang (91) hat, an dem ein Bildsignal entnommen werden kann, das durch Multiplizieren der Ausgangssignale des ersten und des zweiten Signalpfades erzeugt wird.

10. Vorrichtung zur Erzeugung einer Abbildung eines zu untersuchenden Raumes, welche Vorrichtung folgende Elemente enthält:

eine gepulste Quelle (15) kohärenter Wellen und eine mit der Quelle verbundene Wandlereinrichtung (11, 41), mit der Wellenimpulse in den Raum gesendet werden, die von im Raum liegenden Reflektoren reflektierten Echowellen empfangen werden, und jeweils ein entsprechendes elektrisches Echosignal erzeugt wird,

einen mit der Wandlereinrichtung (11, 41) verbundenen Empfänger zur Erzeugung eines Bildsignals durch Verarbeitung des Echosignals, welcher Empfänger einen ersten Signalpfad (86) enthält, der einen mit der Wandlereinrichtung (11, 41) verbundenen Eingang, einen Amplitudendemodulator (81, 82) und einen Ausgang (84) hat, an dem ein erstes Ausgangssignal abgegeben wird, dessen Amplitude annähernd dem Logarithmus der Amplitude des Echosignals entspricht, und

eine mit dem Empfänger verbundene Bildanzeigevorrichtung (24), dadurch gekennzeichnet, daß der Empfänger ferner folgende Einrichtungen aufweist:

a) einen zweiten Signalpfad (78), der einen mit dem Eingang des ersten Signalpfades und dadurch mit der Wandlereinrichtung (11, 41) verbundenen Eingang, einen Frequenz- oder Phasendemodulator (72, 73, 74) und einen Ausgang (77) hat, an dem ein zweites Ausgangssignal abgegeben wird, das die Frequenz- oder Phaseninformation des Echosignals darstellt, und

b) eine Addiererschaltung (85, 102, 111), die einen ersten mit dem Ausgang (84) des ersten Signalpfades verbundenen Eingang, einen zweiten mit dem Ausgang (77) des zweiten Signalpfades verbundenen Eingang und einen Ausgang (91) hat, an dem ein Bildsignal entnommen werden kann, das durch Addieren der Ausgangssignale des ersten und des zweiten Signalpfades erzeugt wird.

11. Vorrichtung gemäß Anspruch 9, dadurch gekennzeichnet, daß der zweite Signalpfad (78) eine dem Frequenz- oder Phasendemodulator nachgeordnete Schaltung (75, 101) enthält, die so eingerichtet ist, daß die Amplitude des zweiten Ausgangssignals eine nichtlineare Funktion des Absolutwertes der Abweichung der Frequenz des Echosignals von einer Referenzfrequenz ist.

12. Vorrichtung gemäß Anspruch 10, dadurch gekennzeichnet, daß der zweite Signalpfad (78) eine dem Frequenz- oder Phasendemodulator nachgeordnete Schaltung (75, 76) enthält, die so eingerichtet ist, daß die Amplitude des zweiten Ausgangssignals proportional zum Absolutwert der Abweichung der Frequenz des Echosignals von einer Referenzfrequenz ist.

13. Vorrichtung gemäß einem der Ansprüche 11–12, dadurch gekennzeichnet, daß die Referenzfrequenz gleich der Sendefrequenz ist.

14. Vorrichtung gemäß einem der Ansprüche 11–12, dadurch gekennzeichnet, daß die Referenzfrequenz variabel und um eine Tiefenkorrektur kleiner als die Sendefrequenz ist.

15. Vorrichtung gemäß einem der Ansprüche 9–14, dadurch gekennzeichnet, daß sie einen Schalter (112) enthält, der im Ansprechen auf das Ausgangssignal eines ersten Grenzwertgliedes (113) entweder den Ausgang der Verknüpfungsschaltung (111) oder den Ausgang (84) des ersten Signalpfades (86) mit der Bildanzeigevorrichtung (24) verbindet, wobei ein Eingang des Grenzwertgliedes mit dem Ausgang des ersten Signalpfades (86) verbunden ist, und wobei der Schalter diesen Ausgang mit der Bildanzeigevorrichtung verbindet, wenn die Amplitude des ersten Ausgangssignals einen ersten vorgegebenen Grenzwert überschreitet.

16. Vorrichtung gemäß einem der Ansprüche 9–15, dadurch gekennzeichnet, daß sie einen Schalter (112) enthält, der im Ansprechen auf das Ausgangssignal eines zweiten Grenzwertgliedes (114) entweder den Ausgang der Verknüpfungsschaltung (111) oder den Ausgang (84) des ersten Signalpfades mit der Bildanzeigevorrichtung (24) verbindet, wobei ein Eingang des zweiten Grenzwertgliedes (114) mit dem Ausgang einer Einrichtung (115) zur Messung des Signal-Rausch-Verhältnisses des ersten Ausgangssignals verbunden ist, und wobei der Schalter (112) den Ausgang (84) des ersten Signalpfades mit der Bildanzeigevorrichtung (24) verbindet, wenn die Amplitude des Ausgangssignals der Einrichtung zur Messung des Signal-Rausch-Verhältnisses einen zweiten vorgegebenen Grenzwert unterschreitet.

## Revendications

1. Procédé pour former l'image d'une zone à examiner, selon lequel des impulsions d'ondes, qui sont produites par une source pulsée d'ondes cohérentes, sont émises dans la zone, les ondes échos réfléchies par des réflecteurs situés dans la zone sont reçues et un signal d'écho électrique correspondant est respectivement produit, et un premier signal de sortie est produit au moyen d'une modulation d'amplitude d'un signal, qui est dérivé du signal d'écho et dont l'amplitude est proportionnelle à l'amplitude des signaux d'échos, caractérisé en ce que

a) un second signal de sortie, qui représente l'information de la fréquence ou de la phase du signal d'écho, est formé par une modulation de fréquence ou une modulation de phase du signal qui est dérivé du signal d'écho, et

b) les premier et second signaux de sortie sont multipliés pour l'obtention d'un signal d'image, qui peut être visualisé à l'aide d'un dispositif d'affichage pour produire l'image de la zone.

2. Procédé pour former l'image d'une zone à examiner, selon lequel des impulsions d'ondes, qui sont produites par une source pulsée d'ondes cohérentes, sont émises dans la zone, les ondes échos réfléchies par des réflecteurs situés dans la zone sont reçues et un signal d'écho électrique correspondant est respectivement produit, et un premier signal de sortie, qui représente l'information d'amplitude du signal d'écho, est produit au moyen d'une modulation d'amplitude appliquée à un signal qui est dérivé du signal d'écho par formation du logarithme, caractérisé en ce que

a) un second signal de sortie, qui représente l'information de la fréquence ou de la phase du signal d'écho, est formé par une modulation de fréquence ou une modulation de phase du signal qui est dérivé du signal d'écho, et

b) les premier et second signaux de sortie sont multipliés pour l'obtention d'un signal d'image, qui peut être visualisé à l'aide d'une dispositif d'affichage pour produire l'image de la zone.

3. Procédé selon la revendication 1, caractérisé en ce que l'amplitude du second signal de sortie est une fonction non linéaire de la valeur absolue de l'écart entre la fréquence du signal d'écho et une fréquence de référence.

4. Procédé selon la revendication 2, caractérisé en ce que l'amplitude du second signal de sortie est proportionnelle à la valeur absolue de l'écart entre la fréquence du signal d'écho et une fréquence de référence.

5. Procédé selon l'une des revendications 3 ou 4, caractérisé en ce que la fréquence de référence est égale à la fréquence d'émission.

6. Procédé selon l'une des revendications 3 ou 4, caractérisé en ce que la fréquence de référence est variable et est inférieure, d'une correction de profondeur, à la fréquence d'émission.

7. Procédé selon l'une des revendications 1-6, caractérisé en ce qu'un signal, qui correspond à l'amplitude du premier signal de sortie, est comparé à une valeur limite prédéterminée, et que, lorsque l'amplitude du premier signal de sortie est supérieure à la valeur limite, la combinaison des signaux de sortie est supprimée et le premier signal de sortie est utilisé comme signal d'image.

8. Procédé selon l'une des revendications 1-7, caractérisé en ce que le rapport signal/bruit du premier signal de sortie est mesuré et comparé à une valeur limite prédéterminée, et que, lorsque le rapport mesuré est inférieur à la valeur limite, la combinaison des signaux de sortie est supprimée et le premier signal de sortie est utilisé comme signal d'image.

9. Dispositif pour former une image d'une zone à examiner, ce dispositif contenant les éléments suivants:

une source pulsée (15) d'ondes cohérentes et un dispositif transducteur (11, 41), qui est relié à la source et qui émet, dans la zone, des impulsions d'ondes, les ondes échos réfléchies par des réflecteurs situés dans la zone sont reçues et un signal d'écho électrique correspondant respectif est produit, un récepteur relié au dispositif transducteur (11, 41) et servant à produire un signal d'image par traitement du signal d'écho, ce récepteur contenant une première voie (86) de transmission de signaux, qui possède une entrée reliée au dispositif transducteur (11, 41), contient un démodulateur d'amplitude (81, 82) et possède une sortie (84), sur laquelle est délivrée un premier signal de sortie, dont l'amplitude est proportionnelle à l'amplitude des signaux d'échos, et un dispositif d'affichage d'images (24), relié au récepteur, caractérisé en ce que le récepteur contient en outre les dispositifs suivants:

a) une seconde voie (78) de transmission de signaux, qui comporte une entrée, reliée à l'entrée de la première voie de transmission de signaux et par conséquent au dispositif transducteur (11, 41), un démodulateur de fréquence ou de phase (72, 73, 74) et une sortie (77), sur laquelle est délivrée un second signal de sortie, qui représente l'information de la fréquence ou de la phase du signal d'écho, et

b) un circuit multiplicateur (85, 102, 111), qui possède une première entrée, reliée à la sortie (84) de la première voie de transmission de signaux, et une seconde entrée reliée à la sortie (77) de la seconde voie de transmission de signaux, et une sortie (91), sur la quelle peut être prélevé un signal obtenu par multiplication des signaux de sortie des première et seconde voies de transmission de signaux.

10. Dispositif pour former une image d'une zone à examiner, ce dispositif contenant les éléments suivants:

une source pulsée (15) d'ondes cohérentes et un dispositif transducteur (11, 41), qui est relié à la source et qui émet, dans la zone, des impulsions d'ondes, les ondes d'échos réfléchies par des réflecteurs situés dans la zone sont reçues et un signal d'écho électrique correspondant respectif est produit, un récepteur relié au dispositif transducteur (11, 41) et servant à produire un signal d'image par traitement du signal d'écho, ce récepteur contenant une première voie (86) de transmission de signaux, qui possède une entrée reliée au dispositif transducteur (11, 41), un démodulateur d'amplitude (81, 82) et une sortie (84), sur laquelle est délivrée un premier signal de sortie, dont l'amplitude correspond approximativement au logarithme de l'amplitude du signal d'écho, et un dispositif d'affichage d'images (24), relié au récepteur, caractérisé en ce que le récepteur contient en outre les dispositifs suivants:

a) une seconde voie (78) de transmission de signaux, qui comporte une entrée, reliée à l'entrée de la première voie de transmission de signaux et par conséquent au dispositif transducteur (11, 41), un démodulateur de fréquence ou de phase (72, 73, 74) et une sortie (77), sur laquelle est délivrée un second signal de sortie, qui représente l'information de la fréquence ou de la phase du signal d'écho, et

b) un circuit additionneur (85, 102, 111), qui comporte une première entrée, reliée à la sortie (84) de la première voie de transmission de signaux, une seconde entrée, reliée à la sortie (77) de la seconde voie de transmission de signaux, et une sortie (91), sur laquelle peut être prélevé un signal d'image, qui est produit par addition des signaux de sortie des première et seconde voies de transmission de signaux.

11. Dispositif selon la revendication 9, caractérisé en ce que la seconde voie de transmission de signaux (78) contient un circuit (75, 101), qui est branché en aval du démodulateur de fréquence ou de phase est est agencé de manière que l'amplitude du second signal de sortie est une fonction non linéaire de la valeur absolue entre l'écart entre la fréquence du signal d'écho et une fréquence de référence.

12. Dispositif selon la revendication 10, caractérisé en ce que la seconde voie de transmission de signaux (78) contient un circuit (75, 76), qui est branché en aval du démodulateur de fréquence ou de phase est est agencé de manière que l'amplitude du second signal de sortie est une fonction non linéaire de la valeur absolue entre l'écart entre la fréquence du signal d'écho et une fréquence de référence.

13. Dispositif selon l'une des revendications 11-12, caractérisé en ce que la fréquence de référence est égale à la fréquence d'émission.

14. Dispositif selon l'une des revendications 11-12, caractérisé en ce que la fréquence de référence est variable et est inférieure, d'une correction de profondeur, à la fréquence d'émission.

15. Dispositif selon l'une des revendication 9-14, caractérisé en ce qu'il contient un commutateur (112) qui, en réponse au signal de sortie d'un premier circuit à valeur limite (113), relie soit la sortie du circuit combinatoire 111, soit la sortie 84 de la première voie de transmission de signaux au dispositif d'affichage d'images (24), une entrée du circuit à valeur limite étant reliée à la sortie de la première voie de transmission de signaux (86), et que le commutateur relie cette sortie au dispositif d'affichage d'images lorsque l'amplitude du premier signal de sortie dépasse une première valeur limite prédéterminée.

16. Dispositif selon l'une des revendications 9-15, caractérisé en ce qu'il contient un commutateur (112) qui, en réponse au signal de sortie a'un second circuit à valeur limite (114) relie soit la sortie du circuit combinatoire (111), soit la sortie (84) de la première voie de transmission de signaux au dispositif d'affichage d'images (24), une entrée du second circuit à valeur limite (114) étant reliée à la sortie d'un dispositif (115) servant à mesurer le rapport signal/bruit du premier signal de sortie, et que le commutateur (112) relie la sortie (84) de la première voie de transmission de signaux au dispositif d'affichage d'images lorsque l'amplitude du signal de sortie du dispositif servant à mesurer le rapport signal/bruit tombe au-dessous d'une seconde valeur prédéterminée.

**Claims**

1. A method of producing an image of an area under investigation, in which method wave pulses generated by a pulsed source of coherent waves are transmitted into the area, the echo waves reflected from reflectors in the area are received and a corresponding electrical echo signal is produced and a first output signal is produced by amplitude modulation of a signal which is derived from the echo signal and whose amplitude is proptortional to the amplitude of the echo signals, characterised that:
   (a) a second output signal representing the frequency or phase information of the echo signal is produced by a frequency or phase demodulation of the signal derived from the echo signal, and
   (b) the first and second output signals are multiplied to produce an image signal which can be displayed by display means to produce the image of the area.

2. A method of producing an image of an area under investigation, in which method wave pulses generated by a pulsed source of coherent waves are transmitted into the area, the echo waves reflected from reflectors in the area are received and a corresponding electrical echo signal is produced for each of them and a first output signal representing the amplitude information of the echo signal is produced by amplitude demodulation of a signal derived from the echo signal by logarithmisation, characterised in that
   (a) a second output signal representing the frequency or phase information of the echo signal is produced by a frequency or phase demodulation of the signal derived from the echo signal, and
   (b) the first and second output signals are added together to produce an image signal which can be made visible to display the area through the agency of display means.

3. A method according to claim 1, characterised in that the amplitude of the second output signal is a non-linear function of the absolute value of the deviation of the frequency of the echo signal from a reference frequency.

4. A method according to claim 2, characterised in that the amplitude of the second output signal is proportional to the absolute value of the deviation of the frequency of the echo signal from a reference frequency.

5. A method according to claim 3 or 4, characterised in that the reference frequency is equal to the transmission frequency.

6. A method according to claim 3 or 4, characterised in that the reference frequency is variable and is lower than the transmission frequency by a depth correction factor.

7. A method according to any of claims 1–6, characterised in that a signal corresponding to the amplitude of the first output signal is compared with a predetermined threshold value and when the amplitude of the first output signal is greater than the threshold value, the output signals are not combined and the first output signal is used as the image signal.

8. A method according to any of claims 1–7, characterised in that the signal-noise ratio of the first output signal is measured and compared with a predetermined threshold value and when the measured ratio is less than the threshold value the output signals are not combined and the first output signal is used as the image signal.

9. An apparatus for producing an image of an area under examination, which apparatus comprises the following elements:
   a pulsed source (15) of coherent waves and a transducer device (11, 41) which is connected to the source and by menas of which wave pulses are transmitted into the area, the echo waves reflected from reflectors in the area are received and a corresponding electrical echo signal is produced for each of them;
   a receiver connected to the transducer device (11, 14) to produce an image signal by processing of the echo signal, the receiving comprising a first signal path (86) having an input connected to the transducer device (11, 41), an amplitude demodulator (81, 82), and an output (84) at which a first output signal is delivered whose amplitude is proportional to the amplitude of the echo signals and

display means connected to the receiver,

characterised in that the receiver also has the following facilities:

(a) a second signal path (78) having an input connected to the input of the first signal path and hence to the transducer device (11, 41), a frequency or phase demodulator (72, 73, 74) and an output (77) at which there is delivered a second output signal representing the frequency or phase information of the echo signal, and

(b) a multiplying circuit (85, 102, 111) having a first input connected to the output (84) of the first signal path, a second input connected to the output (77) of the second signal path, and an output (91) from which an image signal produced by multiplying the output signals of the first and second signal paths can be derived.

10. An apparatus for producing an image of an area under investigation and comprising the following elements:

a pulsed source (15) of coherent waves and a transducer device (11, 41) which is connected to the source and which is effective to transmit wave pulses into the area, the echo waves reflected by reflectors in the area received and a corresponding electrical echo signal is produced, and

a receiver connected to the transducer device (11, 41) to produce an image signal by processing of the echo signal, such receiver comprising a first signal path (86) having an input connected to the transducer device (11, 41), an amplitude demodulator (81, 82) and an output (84) at which a first output signal whose amplitude corresponds substantially to the logarithm of the amplitude of the echo signal is delivered, and

display means (24) connected to the receiver,

characterised in that the receiver also has the following facilities:

(a) a second signal path (78) having an input connected to the input of the first signal path and hence to the transducer device (11, 41), a frequency or phase demodulator (72, 73, 74) and an output (77) at which a second output signal representing the frequency or phase information of the echo signal is delivered, and

(b) an adding arrangement (85, 102, 111) having a first input connected to the output (84) of the first signal path, a second input connected to the output (77) of the second signal path and an output (91) from which an image signal produced by adding the output signals of the first and second signal paths can be derived.

11. An apparatus according to claim 9, characterised in that the second signal path (78) comprises a circuit arrangement (75, 101) which is disposed after the frequency or phase demodulator and which is so devised that the amplitude of the second output signal is a non-linear function of the absolute value of the deviation of the frequency of the echo signal from a reference frequency.

12. An apparatus according to claim 10, characterised in that the second signal path (78) comprisess a circuit arrangement (75, 76) which is disposed after the frequency or phase demodulator and which is so devised that the amplitude of the second output signal is proportional to the absolute value of the deviation of the frequency of the echo signal from a reference frequency.

13. An apparatus according to claim 11 or 12, characterised in that the reference frequency is equal to the transmission frequency.

14. An apparatus according to claim 11 or 12, characterised in that the reference frequency is variable and is lower than the transmission frequency by a depth correction factor.

15. An apparatus according to any of claims 9–14, characterised in that it comprises a switch (112) which in response to the output signal of a first threshold circuit (113) connects either the output of the combining circuit (111) or the output (84) of the first signal path (86) to the image display means (24), one input of the threshold circuit being connected to the output of the first signal path (86), the switch connecting the last-mentioned output to the image display means (24) when the amplitude of the first output signal exceeds a first predetermined threshold value.

16. An apparatus according to any of claims 9–15, characterised in that it comprises a switch (112) which in response to the output signal of a second threshold circuit (114) connects either the output of the combining circuit (111) or the output (84) of the first signal path to the image display means (24), one input of the second threshold circuit (114) being connected to the output of means (115) for measuring the signal-noise ratio of the first output signal, the switch (112) connecting the output (84) of the first signal path to the image display (24) when the amplitude of the output signal of the means for measuring the signal-noise ratio undershoots a second predetermined threshold value.

Fig. 1

Fig. 2

EINGANGSSIGNAL

AUSGANGSSIGNAL

EP 0 206 290 B1

EP 0 206 290 B1

Fig. 3

Fig. 4

29

71    72    73    74    75    101    78

77

19    81    82    83    84    91

102    86

_Fig. 5_

EP 0 206 290 B1

Fig. 6